# EUROPÄISCHE PATENTANMELDUNG

(11) **EP 1 985 904 A1**
(43) Veröffentlichungstag der Anmeldung: **29.10.2008**
(21) Anmeldenummer: 08007683.9
(22) Anmeldetag: 21.04.2008
(51) Int. Cl.: F16L 23/02

(54) **Axial und winklig bewegliche, gasdichte Verbindung**

(30) Priorität: 27.04.2007 AT 6642007
(71) Anmelder: Vaillant GmbH, 42859 Remscheid (DE)
(72) Erfinder: Gaisbauer, Norbert, 42799 Leichlingen (DE); Gerhards, Andreas, 42897 Remscheid (DE); Van Nhiem, Do, 42657 Solingen (DE)
(74) Vertreter: Hocker, Thomas

(57) **Zusammenfassung**

Axial und winklig bewegliche, gasdichte Verbindung zwischen einem Gasrohr (1) und einem Anschlussstück (6), welches vorzugsweise mit einer Gasarmatur (3) verbunden ist, wobei das Gasrohr (1) mit einem Anschluss (4) mit im wesentlichen zylindrischen Innenprofil gasdicht verbunden ist, das Anschlussstück (6) über ein im wesentlichen zylindrisches Außenprofil verfügt, welches geringfügig kleiner als das Innenprofil des Anschlusses (4) ist, das Innenprofil des Anschlusses (4) sich im Außenprofil des Anschlussstücks (6) überlappend befindet, in dieser Überlappung eine Dichtung (5) den Spalt zwischen dem Innenprofil des Anschlusses (4) und dem Außenprofil des Anschlussstücks (6) abdichtet, der mit dem Gasrohr (1) verbundene Anschluss (4) über eine Abwinklung (9) mit Bohrung (10), welche im wesentlichen parallel zum Innenprofil des Anschlusses (4) verläuft, verfügt, eine Führung (8) mit beidseitigem Anschlag durch die Bohrung (10) der Abwinklung (9) führt und mit dem Anschlussstück (6) verbunden ist.

## Beschreibung

Die Erfindung bezieht sich auf eine axial und winkelig bewegliche, gasdichte Verbindung zwischen einem Gasrohr und einem Anschlussstück, welches vorzugsweise mit einer Gasarmatur verbunden ist.

Gasführende unter Druck stehende Teile werden gemäß dem Stand der Technik starr miteinander verbunden, zumeist kommen hierbei zur Dichtung Flachdichtungen oder Schneidringverbindungen zum Einsatz. Sollen die gasführenden Teile geringfügig beweglich sein, so kommen zumeist Edelstahl-Wellrohre zum Einsatz.

Bei derartigen Wellrohrverbindungen sind jedoch die axialen und winkeligen Bewegungsmöglichkeiten bei adäquatem Krafteinsatz begrenzt.

Der Erfindung liegt daher die Aufgabe zugrunde, eine gasdichte Verbindung zu schaffen, welche in gewissem Maße sowohl eine axiale als auch eine winkelige Toleranz bei der Verbindung zulässt und dabei dennoch eine Gasdichtheit gewährleistet.

Dies wird gemäß den Merkmalen des unabhängigen Anspruchs 1 dadurch gelöst, dass zwei Teile dadurch verbunden werden, dass ein Teil über ein im Wesentlichen zylindrisches Innenprofil und das andere Teil über ein im Wesentlichen zylindrisches Außenprofil verfügt, wobei das Außenprofil geringfügig größer als das Innenprofil ist, bei der Verbindung das Innen- und das Außen profil einander überlappen, in dieser Überlappung sich eine Dichtung befindet und letztendlich eine Führung mit beidseitigem Anschlag die Bewegungsfreiheit der beiden Teile zueinander einschränkt.

Vorteilhafte Ausgestaltungen ergeben sich durch die Merkmale der Unteransprüche. So kann in einem einfachen Fall die Führung aus einer Schraube bestehen. Die Schraube ragt durch die Bohrung einer Abwinkelung des einen Teils hindurch und ist mit dem anderen Teil verschraubt. Die Verbindungselemente sind in der Regel mit Bauteilen oder Rohren verbunden, die Verbindung kann hierbei über Verpressung, Verschweißung oder Verschraubung mittels Zwischenlage einer Dichtung erfolgen.

Die Erfindung wird nun anhand der Figuren erläutert. Hierbei zeigen
Fig. 1 eine erfindungsgemäße Verbindung im Schnitt,
Fig. 2 dieselbe erfindungsgemäße Verbindung in der seitlichen Draufsicht sowie

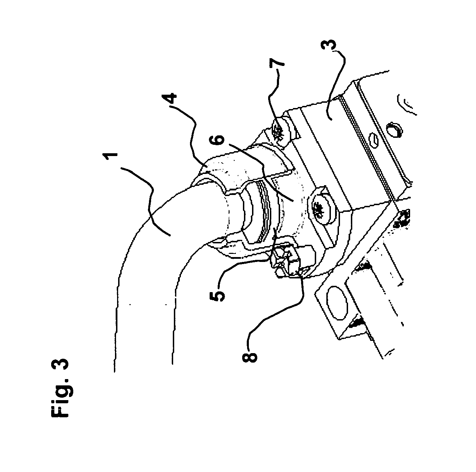

Fig. 3 eine perspektivische Ansicht der Verbindung.

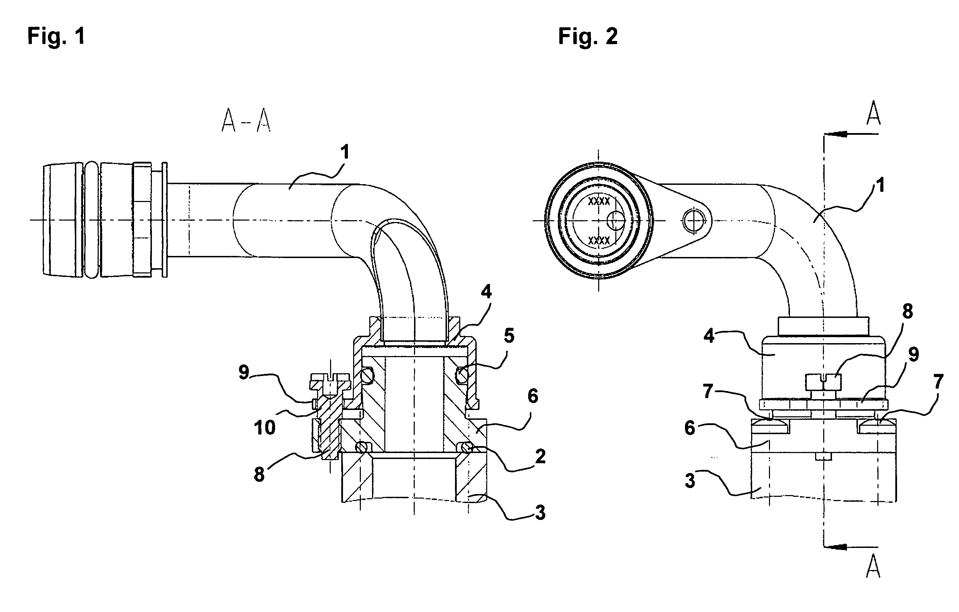

Figur 1 zeigt ein Gasrohr 1, welches mit einem Anschluss 4 verbunden ist. Der Anschluss 4 verfügt über ein zylindrisches Innenprofil. Ferner verfügt der Anschluss 4 über eine Abwinkelung 9 mit Bohrung 10. Die Bohrung 10 verläuft hierbei im Wesentlichen parallel zum Innenprofil des Anschusses 4. Eine Gasarmatur 3 ist mit einem Anschlussstück 6 über Schrauben 7 und der Zwischenlage einer Dichtung 2 verbunden. Das Anschlussstück 6 verfügt über eine zylindrische Außenkontur. In dieser befindet sich eine umlaufende Nut, in der sich eine Dichtung 5 befindet. Ferner befindet sich in dem Anschlussstück 6 eine Bohrung 10, welche parallel zum zylindrischen Außenprofil verläuft.

Bei der Montage wird der Anschluss 4 über das Anschlussstück 6 gestülpt, so dass das Innenprofil des Anschlusses 4 und das Außenprofil des Anschlussstücks 6 sich überlappen. Hierzu ist es notwendig, dass das Außenprofil des Anschlussstücks 6 geringfügig kleiner als das Innenprofil des Anschlusses 4 ist. Die Dichtung 5 dichtet das daraus entstehende Spiel ab, so dass die Verbindung gasdicht ist. Durch die Bohrung 10 der Abwinkelung 9 wird eine Führung 8 in Form einer Schraube gesteckt und mit dem Gewinde im Anschlussstück 6 verschraubt. Da die Schraube nicht bis zum Anschlag eingedreht wird, verfügt die Verbindung sowohl axial als auch winkelig über Spiel.

Die Erfindung beansprucht auch den Fall, dass das Gasrohr 1 über einen Anschluss 4 mit Außenprofil und das Anschlussstück 6 über ein korrespondierendes Innenprofil verfügt. Ferner wird die Abwandlung beansprucht, dass das Anschlussprofil 6 über die Abwinkelung 9 mit Bohrung 10 verfügt und die Führung 8 mit dem Anschluss verbunden ist.

## Patentansprüche

1. Axial und winklig bewegliche, gasdichte Verbindung zwischen einem Gasrohr (1) und einem Anschlussstück (6), welches vorzugsweise mit einer Gasarmatur (3) verbunden ist, **dadurch gekennzeichnet, dass** das Gasrohr (1) mit einem Anschluss (4) mit im wesentlichen zylindrischen Innenprofil gasdicht verbunden ist,
das Anschlussstück (6) über ein im wesentlichen zylindrisches Außenprofil verfügt, welches geringfügig kleiner als das Innenprofil des Anschlusses (4) ist,
das Innenprofil des Anschlusses (4) sich im Außenprofil des Anschlussstücks (6) überlappend befindet,
in dieser Überlappung eine Dichtung (5) den Spalt zwischen dem Innenprofil des Anschlusses (4) und dem Außenprofil des Anschlussstücks (6) abdichtet,
der mit dem Gasrohr (1) verbundene Anschluss (4) über eine Abwinkelung (9) mit Bohrung (10), welche im wesentlichen parallel zum Innenprofil des Anschlusses (4) verläuft, verfügt,
eine Führung (8) mit beidseitigem Anschlag durch die Bohrung (10) der Abwinklung (9) führt und mit dem Anschlussstück (6) verbunden ist.

2. Axial und winklig bewegliche, gasdichte Verbindung zwischen einem Gasrohr (1) und einem Anschlussstück (6) nach Anspruch 1, **dadurch gekennzeichnet, dass** die Führung (8) eine Schraube ist, welche mit dem Anschlussstück (6) derart verschraubt ist, dass sich das Anschlussstück (6) im Anschluss (4) bewegen kann.

3. Axial und winklig bewegliche, gasdichte Verbindung zwischen einem Gasrohr (1) und einem Anschlussstück (6) nach einem der Ansprüche 1 oder 2, **dadurch gekennzeichnet, dass** der Anschluss (4) mit dem Gasrohr (1) verpresst oder verschweißt ist.

4. Axial und winklig bewegliche, gasdichte Verbindung zwischen einem Gasrohr (1) und einem Anschlussstück (6) nach einem der Ansprüche 1 bis 3, **dadurch gekennzeichnet, dass** das Anschlussstück (6) mittels Schrauben (7) unter Zwischenlage einer Dichtung (2) mit einer Gasarmatur (3) verbunden ist.
